(19) Europäisches Patentamt
European Patent Office
Office européen des brevets

(11) **EP 3 451 238 A1**

(12) **EUROPEAN PATENT APPLICATION**
published in accordance with Art. 153(4) EPC

(43) Date of publication:
**06.03.2019 Bulletin 2019/10**

(51) Int Cl.:
***G06N 3/063*** (2006.01)

(21) Application number: **16899848.2**

(22) Date of filing: **29.04.2016**

(86) International application number:
**PCT/CN2016/080696**

(87) International publication number:
**WO 2017/185336 (02.11.2017 Gazette 2017/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Cambricon Technologies Corporation Limited**
**Beijing 100190 (CN)**

(72) Inventors:
• **LIU, Shaoli**
**Beijing 100190 (CN)**

• **SONG, Jin**
**Beijing 100190 (CN)**
• **CHEN, Yunji**
**Beijing 100190 (CN)**
• **CHEN, Tianshi**
**Beijing 100190 (CN)**

(74) Representative: **ABG Intellectual Property Law, S.L.**
**Avenida de Burgos, 16D**
**Edificio Euromor**
**28036 Madrid (ES)**

(54) **APPARATUS AND METHOD FOR EXECUTING POOLING OPERATION**

(57)     The present disclosure provides an apparatus for performing a pooling operation. The apparatus includes an instruction storage unit, a controller unit, a data access unit, and an operation module. The instruction storage unit reads instructions through the data access unit and caches the read instructions. The controller unit reads the instructions from the instruction storage unit, decodes the instructions into control signals that controls the behaviors of the operation module, and then distributes the control signals to the operation module. The data access unit is configured to access an external address space to complete data loading and storage. The operation module is configured to perform a maximization operation in a max-pooling operation, or to perform accumulation and multiplication operations in an avgpooling operation. In a forward operation of the max-pooling operation, the operation module cyclically reads an input vector of a pooling kernel, and performs a comparing operation to obtain an output vector of a new kernel and store an index vector corresponding to each output vector until the pooling operation of the current layer is completed. The present disclosure can solve the problem that the operation performance of the CPU and the GPU is insufficient and the front-end decoding overhead is large.

FIG. 1

## Description

<u>**TECHNICAL FIELD**</u>

The present disclosure relates to artificial neural networks, and more particular to an apparatus and a method for performing a pooling operation.

<u>**BACKGROUND**</u>

Multi-layer artificial neural networks are widely used in the fields of pattern recognition, image processing, function approximation, optimization calculation, et al. With high recognition accuracy and good parallelism, the multi-layer artificial networks have attracted more and more attentions from the academia and industry in recent years.

The pooling operation refers to performing a down-sampling operation of local features in the feature map of the neural network, to reduce the dimension of the feature map. There are two types of pooling operations. One is max-pooling operation that means taking the maximum value as the result in a kernel. The other is avgpooling operation that means taking the average value as the result in the kernel. The kernel here is the pooling core. The size of the kernel is specified by the parameters. The kernel slides on the feature map according to the stride and performs the pooling operation to obtain a result.

In a known method supporting forward operations and reverse trainings of the pooling operations of the multi-layer artificial neural network, general processors are applied. The method supports the above operations by executing general instructions using general register files and general functional components. The method has a disadvantage that a single general processor has a low operational performance and cannot satisfy the operation performance requirement of a general multi-layer artificial neural network. When multiple general processors execute in parallel, communication between the general processors becomes a bottleneck of the performance. In addition, the general processor is required to decode the reverse operations of the multi-layer artificial neural network into a long sequence of operations and fetch instructions and front-end decoding by the processor causes a large power overhead.

In another known method supporting forward operations and reverse trainings of the pooling operations of the multi-layer artificial neural network, a graphics processing unit (GPU) is applied. The method supports the above operation by executing general SIMD instructions using general register files and a general stream processing unit. Since the GPU is a device specially for performing graphic image operations and scientific calculations, without special support for the operations of the multi-layer artificial neural network, a large amount of front-end decoding operations are still required to perform the operations of the multi-layer artificial neural network, which causes a large amount of extra overhead. In addition, the GPU has only a small on-chip cache, and the model data (weight) of the multi-layer artificial neural network is required to be repeatedly transferred from an off-chip, the bandwidth of the off-chip becomes the main performance bottleneck, and causes a large number of power overhead.

<u>**SUMMARY**</u>

An aspect of the present disclosure provides an apparatus for performing a pooling operation. The apparatus includes an instruction storage unit, a controller unit, a data access unit, and an operation module. The instruction storage unit is configured to cache instructions. The controller unit is configured to read instructions from the instruction storage unit and decode the instructions into microinstructions that control the behavior of the operation module. The data access unit is configured to write data from a memory to a corresponding data storage unit of the operation module or read data from the data storage unit to the memory. The operation module is configured to perform the maximization operation of the max-pooling operation or the accumulation and multiplication operations of the avgpooling operation in the pooling operation.

Another aspect of the present disclosure provides a method for performing pooling operation of a single layer artificial neural network by the above apparatus.

Another aspect of the present disclosure provides a method of performing a pooling operation of a multi-layer artificial neural network by the above apparatus.

The present disclosure can be applied to the following scenarios (including but not limited to): electronic devices such as data processing devices, robots, computers, printers, scanners, telephones, tablets, smart terminals, mobile phones, driving recorders, navigators, sensors, cameras, cloud servers, cameras, camcorders, projectors, watches, earphones, mobile storage, wearable devices, and so on; vehicles such as aircrafts, ships, vehicles, and so on; household appliances such as TVs, air conditionings, microwave ovens, refrigerators, rice cookers, humidifiers, washing machines, electric lights, gas stoves, cooker hoods, and so on; and medical equipments such as nuclear magnetic resonance instruments, B-ultrasounds, electrocardiographs, and so on.

<u>**BRIEF DESCRIPTION OF THE DRAWINGS**</u>

To understand the present disclosure and its advantage more completely, the following descriptions will briefly illustrate the accompanying drawings.

FIG. 1 illustrates a schematic step diagram of an apparatus for performing a pooling operation according to an embodiment of the present disclosure.

FIG. 2 illustrates a schematic step diagram of an operation module of an apparatus for performing a pooling operation in accordance with an embodiment of the present disclosure.

FIG. 3 illustrates a schematic step diagram of a forward operation of a pooling operation in accordance with an embodiment of the present disclosure.

FIG. 4 illustrates a schematic step diagram of a reverse training of a pooling operation in accordance with an embodiment of the present disclosure.

FIG. 5 illustrates a flow chart of a forward operation of a pooling operation in accordance with an embodiment of the present disclosure.

Fig. 6 illustrates a flow chart of a reverse training of a pooling operation in accordance with an embodiment of the present disclosure.

In all the accompanying drawings, the same apparatus, components, units, and the like are denoted by the same reference numerals.

## DETAILED DESCRIPTION OF ILLUSTRATED EMBODIMENTS

The artificial neural network on which the apparatus for performing a pooling operation is based includes two or more layers of multiple neurons. For a max-pooling operation, in a forward operation, each input vector is compared in turn in a pooling kernel, and the maximum value is taken to be as an output vector. When a reverse training is required, a corresponding index vector is also stored at the same time. The pooling kernel is slid and the above operations are repeated until the pooling operation of the current layer is completed. In the reverse training, an input gradient vector is output to a corresponding storage location according to the vector index stored in the forward operation, to obtain an output gradient vector. For an avgpooling operation, in a forward operation, each input vector is accumulated in the pooling kernel and multiplied by 1/kernel_size to obtain an output vector. The kernel size represents a size of the pooling kernel. The pooling kernel is slid and the above operations are repeated until the pooling operation of the current layer is completed. For the avgpooling operation, in a reverse training, the input gradient vector is multiplied by 1/kernel_size and then output to a corresponding storage location to obtain an output gradient vector.

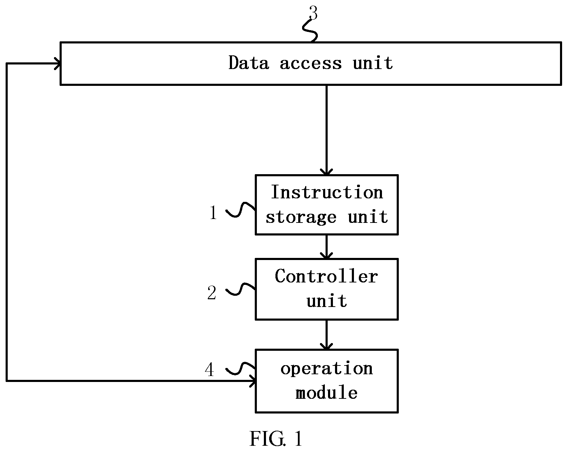

FIG. 1 illustrates a schematic step diagram of an apparatus for performing a pooling operation according to an embodiment of the present disclosure. As illustrated in FIG. 1, the apparatus includes an instruction storage unit 1, a controller unit 2, a data access unit 3, and an operation module 4. The instruction storage unit 1, the controller unit 2, the data access unit 3, and the operation module 4 may all be implemented by hardware circuits (including, but not limited to FPGAs, CGRAs, ASICs, analog circuits, memristors, et al.).

The instruction storage unit 1 reads in instructions through the data access unit 3 and caches the read instructions.

The controller unit 2 reads the instructions from the instruction storage unit 1, decodes the instructions into microinstructions that controls the behaviors of other modules such as the data access unit 3 and the operation module 4, and transmits the microinstructions to the other modules. In other words, the instruction is decoded into control signals for controlling the behaviors of the operation module, and the control signal is then distributed to the modules.

The data access unit 3 is able to access an external address space, directly read and write data to each storage unit inside the apparatus to complete data loading and storage.

The operation module 4 is configured to perform a maximum operation of the max-pooling operation, or accumulation and multiplication operations of the avgpooling operation.

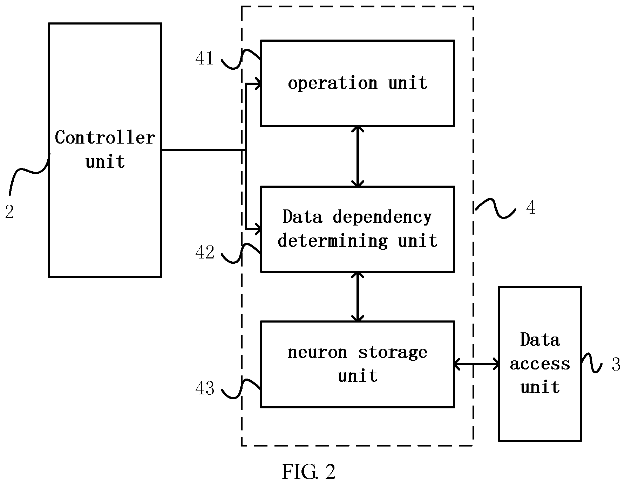

FIG. 2 illustrates a schematic step diagram of an operation module of the apparatus for performing a pooling operation according to an embodiment of the present disclosure. As illustrated in FIG. 2, the operation module 4 includes an operation unit 41, a data dependency determining unit 42, and a neuron storage unit 43.

The neuron storage unit 43 is configured to cache input data and output data used by the operation module 4 in the operation process. The operation unit 41 performs various operational functions of the operation module. The data dependency determining unit 42 is a port for the operation unit 41 to read and write the neuron storage unit 43. At the same time, the data dependency determining unit 42 may ensure that there is no consistency conflict between reading and writing data in the neuron storage unit 43. Specifically, the data dependency determining unit 42 determines whether there is a dependency relationship between data of the microinstruction that has not been executed and data of the microinstructions that are being executed. If not, the microinstructions are allowed to be immediately transmitted; otherwise, the microinstruction must wait and is allowed to be transmitted after all the microinstructions on which the microinstruction that has not been executed depends are fully executed. For example, all the microinstructions sent to the data dependency unit 42 are stored in an instruction queue inside the data dependency unit 42. When there is a conflict between a data range of a read instruction and a data range of a write instruction in a front location of the instruction queue, the read instruction must wait and may be executed after the write instruction on which the read instruction depends is executed. The instruction output from the controller unit 2 is transmitted to the operation unit 41 and the dependency determining unit 42 to control the behaviors of the operation unit 41 and the dependency determining unit 42.

The operation module 4 is configured to perform the forward operation and the reverse training of the pooling operation. The forward operation is described by taking a pooling layer of the artificial neural network as an example. The process of the max-pooling operation is that: out=max(in); the process of the avgpooling operation is that: out= avg(in)=∑in*1/kernel_size. Wherein, 'out' and 'in' are column vectors, and 'kernel_size' is the size of the pooling kernel. Each output vector 'out' corresponds to a set of the input vectors 'in' in the kernel. The pooling operation of the entire pooling layer is performed by the kernel cyclically sliding on the feature map. The reverse training is described by taking a pooling layer of the artificial neural network as an example. The process of the max-pooling operation is that: out_gradient=index*in_gradient; the process of the avgpooling operation is that: out_gradient=in_gradient*1/kernel_size. Wherein, the 'out_gradient' is an output gradient vector; the 'in_gradient' is an input gradient vector; the 'index' is a stored index vector corresponding to the stored input neuron vector and the output neuron vector when the forward operation of the max-pooling operation is performed. The 'kernel_size' is a size of the pooling kernel. Each input gradient vector 'in_gradient' corresponds to a set of output gradient vectors 'out_gradient'.

According to an embodiment of the present disclosure, an instruction set for performing the forward operation and the reverse training of the pooling operation in the foregoing apparatus is also provided. The instruction set includes a CONFIG instruction, a COMPUTE instruction, an IO instruction, a NOP instruction, a JUMP instruction, and a MOVE instruction.

The CONFIG instruction is configured to configure various constants required for the calculation of the current layer before performing the calculation of each layer of the artificial neural network.

The COMPUTE instruction is configured to execute an arithmetic logic calculation of each layer of the artificial neural network.

The IO instruction is configured to read in input data required for the calculation from an external address space, and store the data back to the external space after the calculation is completed.

The NOP instruction is responsible for clearing the microinstructions currently loaded into all the internal cache queue, and ensure that all the instructions preceding the NOP instruction are completely executed. The NOP instruction itself does not include any operations.

The JUMP instruction is responsible for the jump of an address of a next instruction that the controller will read from the instruction storage unit, to implement the jump of the control flow.

The MOVE instruction is configured to transfer the data in an address of an internal address space of the apparatus to another address in the internal address space of the apparatus which is independent from the operation unit and will not occupy any resources of the operation unit.

The method for performing a pooling operation of the present disclosure includes followings stages.

For the max-pooling operation, in a forward operation, the operation module 4 compares each input vector in turn and takes the maximum value as an output vector. When a reverse training is required, a corresponding index vector is simultaneously stored. A new input vector of a pooling kernel is cyclically read, the above comparison operation is performed, to obtain an new output vector of a kernel, until the pooling operation of the current layer is completed. In a reverse training, the operation module 4 outputs an input gradient vector to a corresponding storage location through the data access unit 3 according to the index vector stored in the forward operation, to obtain an output gradient vector.

For an avgpooling operation, in a forward operation, the operation module 4 sequentially accumulates each input vector; then performs a multiplication operation by 1/kernel_size therein to obtain an output vector. The 'kernel_size' represents the size of the pooling kernel. A new input vector of the kernel is cyclically read, the above accumulation and multiplication operations are performed, to obtain a new output vector of the kernel, until the pooling operation of the current layer is completed. In a reverse training, the operation module 4 multiplies the input gradient vector by 1/kernel_size, and outputs the input gradient vector to a corresponding storage location through the data access unit 3, to obtain an output gradient vector.

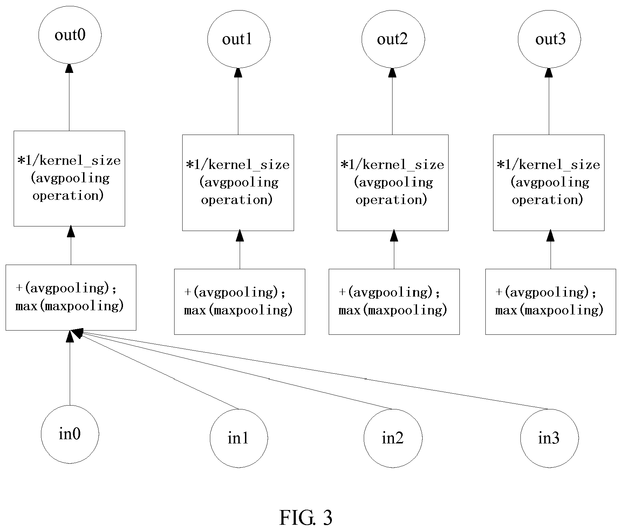

FIG. 3 illustrates a schematic step diagram of a forward operation of a pooling layer of a neural network in accordance with an embodiment of the present disclosure. For an avgpooling operation, in the operation module 4, input neuron vectors in a pooling kernel are respectively accumulated, and then multiplied, that is, multiplied by 1/kernel_size, to obtain corresponding output neuron values. All the output neuron values form a final output neuron vector. The corresponding formula is described as:

$$out = \Sigma in * 1/kernel\_size$$

Wherein, 'out' is the output neuron vector, 'in' is the input neuron vector, and 'kernel_size' is the size of the pooling kernel. According to the control signal of the controller unit 2, the operation module 4 temporarily stores the input neuron vectors [in0, ..., inN] in the neuron storage unit 43. The input neuron vectors are then accumulated and the intermediate result vector is stored in the neuron storage unit 43. After the accumulation of the input neurons of the entire kernel is completed, the intermediate result vector is multiplied by 1/kernel_size, to obtain the corresponding output neuron value. Then, the pooling operation of a next kernel (i.e. the pooling operation of a new input vector of the kernel) is cyclically operated until the pooling operation of the current layer is completed.

For a max-pooling operation, in the operation module 4, input neuron vectors in a pooling kernel are sequentially compared and the maximum value is taken to obtain corresponding output neuron values. All the output neuron values form a final output neuron vector. The corresponding formula is described as:

$$Out = max(in)$$

Wherein, 'out' is the output neuron vector and 'in' is the input neuron vector. According to the control signal of the controller unit 2, the operation module 4 temporarily stores the input neuron vectors [in0, ..., inN] in the neuron storage unit 43. The input neuron vectors are then compared with the intermediate result vector in turn, the maximum value is taken, the intermediate result vector is stored in the neuron storage unit 43, and the final output neuron vector [out0, out1, out2, ..., outN] is obtained. Then, the pooling operation of a next kernel (i.e. the pooling operation of a new input vector of the kernel) is cyclically performed until the pooling operation of the current layer is completed.

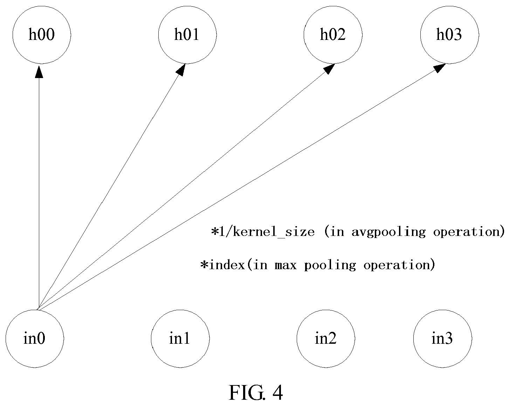

FIG. 4 illustrates a schematic step diagram of a reverse training on a pooling layer of a neural network in accordance with an embodiment of the present disclosure. The process for calculating the output gradient vector in the max-pooling operation is that, out_gradient=index*in_gradient. Wherein, 'index' is the index vector obtained in the forward operation of the max-pooling operation. The 'index' is multiplied by the input gradient vector 'in_gradient' to obtain the output gradient vector to pass the gradient. The process for calculating the output gradient vector in the avgpooling operation is, out_gradient=1/kernel_size*in_gradient. Wherein, 'kernel_size' is the size of the corresponding pooling kernel. The 'kernel_size' is multiplied by the input gradient vector 'in_gradient' to obtain the output gradient vector to pass the gradient.

As illustrated in FIG. 4, the 'in_gradient' ([in0,..., in3], illustrated in FIG. 4) is the output gradient vector of the (n+1)th layer and input gradient vector of the nth layer is obtained, which are completed in the operation module 4 and temporarily stored in the neuron storage unit 43 of the operation module 4. The input gradient vector is multiplied by the index vector or 1/kernel_size to obtain an output gradient vector 'out_gradient' ([out0, ..., out3], illustrated in Fig. 4) of the nth layer.

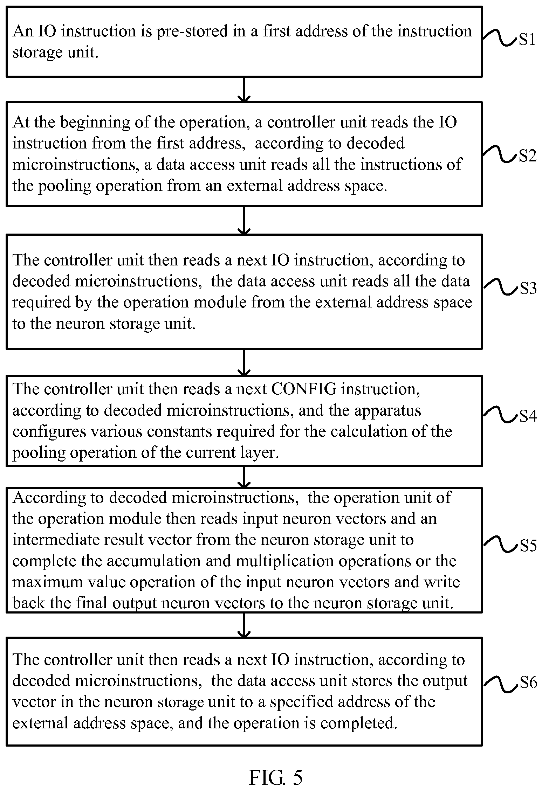

Fig. 5 illustrates a flow chart of a forward operation of a pooling operation in accordance with an embodiment of the present disclosure. The flow chart depicts a process for performing a forward operation of a pooling operation with the apparatus and the instruction set of the present disclosure.

In step S1, an IO instruction is pre-stored at a first address of the instruction storage unit 1.

In step S2, at the beginning of the operation, the controller unit 2 reads the IO instruction from the first address of the instruction storage unit 1. The data access unit 3 reads all the corresponding instructions related to the pooling operation from an external address space, according to a decoded microinstruction. The corresponding instructions are cached in the instruction storage unit 1.

In step S3, the controller unit 2 then reads in a next IO instruction from the instruction storage unit. The data access unit 3 reads all the data required by the operation module 4 from the external address space to the neuron storage unit 43 of the operation module 4, according to the decoded microinstruction. The data includes, such as, the input neuron vectors, interpolation tables, constant tables, and so on.

In step S4, the controller unit 2 then reads in a next CONFIG instruction from the instruction storage unit. The apparatus configures various constants required for the pooling operation of the current layer, according to the decoded microinstruction. For example, the operation unit 41 configures the value of the internal register thereof according to the parameters in the microinstructions. The parameters include, the accuracy setting of the current layer operation, the data (such as, the precision bit of the current layer operation, the reciprocal 1/kemel_size of the size of the pooling kernel in the avgpooling operation, and so on) of the activate function.

In step S5, the operation unit 41 of the operation module 4 reads, according to the microinstruction decoded by the COMPUTE instruction, the input neuron vector and the intermediate result vector from the neuron storage unit 43 to complete the operation on the input neuron vector (in the avgpooling operation, the input neuron vectors are accumulated, then multiplied by 1/kernel_size; in the max-pooling operation, the size of the input neuron vectors are compared and the maximum value is taken). The final output neuron vector is written back to the neuron storage unit 43.

In step S6, the controller unit then reads in the next IO instruction from the instruction storage unit. The data access unit 3 stores the output neuron vectors of the neuron storage unit 43 into a specified address of the external address space, according to the decoded microinstructions. The operation is completed.

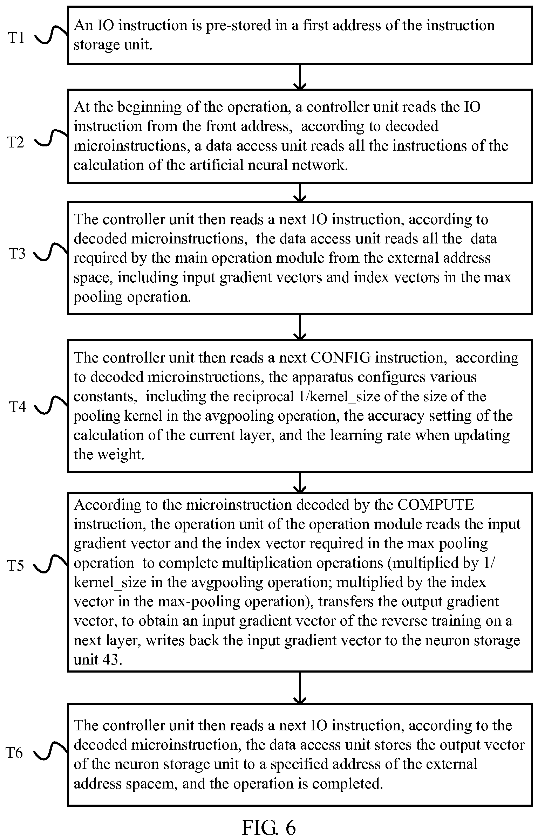

FIG. 6 illustrates a flow chart of a reverse training of a pooling operation in accordance with an embodiment of the present disclosure. The flow chart depicts a process for performing a reverse training of a pooling operation with the apparatus and the instruction set of the present disclosure.

In step T1, an IO instruction is pre-stored at a first address of the instruction storage unit 1.

In step T2, at the beginning of the operation, the controller unit 2 reads the IO instruction from the first address of the instruction storage unit 1. The data access unit 3 reads all the corresponding instructions related to the reverse training of the pooling operation from the external address space, according to a decoded microinstruction. The corresponding instructions are cached in the instruction storage unit 1.

In step T3, the controller unit 2 then reads in a next IO instruction from the instruction storage unit. The data access unit 3 reads all the data required by the operation module 4 from the external address space to the neuron storage unit 43 of the operation module 4, according to the decoded microinstruction. The data includes input gradient vectors and index vectors required in the max-pooling operation.

In step T4, the controller unit 2 then reads in a next CONFIG instruction from the instruction storage unit. The operation unit configures the value of the internal register thereof according to the parameters in the decoded microinstructions. The parameters include, various constants required in the pooling operation of the current layer, such as the reciprocal 1/kernel_size of the size of the pooling kernel in the avgpooling operation, the accuracy setting of the current layer operation, and the learning rate when updating the weight, and so on.

In step T5, the operation unit 41 of the operation module 4 reads, according to the microinstruction decoded by the COMPUTE instruction, the input gradient vector and the index vector required in the max-pooling operation from the neuron storage unit 43 to complete the multiplication operation, transfers the output gradient vector, to obtain the input gradient vector of the reverse training on the next layer, and writes back the input gradient vector to the neuron storage unit 43. The multiplication operation includes multiplied by 1/kernel_size, in the avgpooling operation; multiplied by the index vector in the max-pooling operation.

In step T6, the controller unit then reads in a next IO instruction from the instruction storage unit. The data access unit 3 stores the output gradient vector of the neuron storage unit 43 into a specified address of the external address space, according to the decoded microinstructions. The operation is completed.

For a pooling operation of the multi-layer artificial neural network, the implementation process thereof is similar to the pooling operation of a single-layer neural network. When the previous artificial neural network is executed, the operation instruction of the next layer will take the output neuron vectors or the output gradient vector calculated in the operation module as the input neuron vector or the input gradient vector of the next layer, to perform the above calculation process. The weight address and the weight gradient address in the instructions are also changed to corresponding address of the current layer.

With the apparatus and the instruction set for performing the pooling operation, the problems of insufficient performance of the CPU and the GPU and large overhead of the front-end decoding are solved, which effectively improves the support for the pooling operation of multi-layer artificial neural network.

With the special on-chip caches for the pooling operation, the reuse of the input neurons and the weight data is fully exploited, which prevents repeatedly reading the data to the memory, reduces the memory access bandwidth, and prevents the memory bandwidth becoming performance bottlenecks of the forward operation and the reverse training of the pooling operation.

The processes or methods depicted in the preceding accompanying drawings may be executed by hardware (such as, circuits, special logics, and the like.), firmware, software (such as, software embodied on a non-transitory computer readable medium), or a processing logic of a combination of any two of those. Although the processes or methods have been described above in some order, it should be understood that some operations described can be performed in a different order. Moreover, some operations may be performed in parallel rather than in sequence.

In the foregoing specification, various embodiments of the present disclosure have been described with reference to the specific exemplary embodiments thereof. Obviously, various modifications may be made to the various embodiments without departing from the broader spirit and scope of the present disclosure in the appended claims. Accordingly, the specification and accompany drawings are to be illustrative rather than restrictive.

## Claims

1. An apparatus for performing a pooling operation, the apparatus comprising an instruction storage unit, a controller unit, a data access unit, and an operation module, wherein

   the instruction storage unit is configured to read in instructions through the data access unit and cache the read instructions;
   the controller unit is configured to read the instructions from the instruction storage unit, decode the instructions into control signals which controls the behaviors of the operation module, and then distribute the control signals to the operation module;
   the data access unit is configured to access an external address space to complete data loading and storage; and
   the operation module is configured to perform a maximization operation of a max-pooling operation, or to perform accumulation and multiplication operations of an avgpooling operation.

2. The apparatus for performing the pooling operation according to claim 1, wherein the operation module comprises an operation unit, a data dependency determining unit, and a neuron storage unit,

   the neuron storage unit is configured to cache input data and output data used by the operation module in the operation process;
   the operation unit is configured to complete various operational functions of the operation module; and
   the data dependency determining unit is a port for the operation unit to read and write the neuron storage unit, and the data dependency determining is configured to ensure that there is no consistency conflict between reading and writing data in the neuron storage unit.

3. The apparatus for performing the pooling operation according to claim 2, wherein in a forward operation of the max-pooling operation, the operation module compares each input vector in turn and take the maximum value as an output vector.

4. The apparatus for performing the pooling operation according to claim 3, wherein in the forward operation of the max-pooling operation, the operation module cyclically reads the input vector of a pooling kernel, compares each input vector to obtain an output vector of a new pooling kernel, and stores an index vector corresponding to each output vector until the pooling operation of the current layer is completed.

5. The apparatus for performing the pooling operation according to claim 4, wherein in a reverse training of the max-pooling operation, the operation module outputs an input gradient vector to a corresponding storage location through the data access unit according to the index vector stored in the forward operation, to obtain an output gradient vector.

6. The apparatus for performing the pooling operation according to claim 2, wherein in a forward operation of the avgpooling operation, the operation module accumulates each input vector in turn and performs a multiplication operation by 1/kernel_size therein to obtain an output vector, the kernel size represents a size of the kernel; cyclically reads an input vector of a new kernel and performs accumulation and multiplication operations to obtain a new output vector of the kernel until the pooling operation of the current layer is completed.

7. The apparatus for performing the pooling operation according to claim 2, wherein in a reverse training of the avgpooling operation, the operation module multiplies an input gradient vector by 1/kernel_size, and outputs the input gradient vector to a corresponding storage location through the data access unit to obtain an output gradient vector.

8. The apparatus for performing the pooling operation according to claim 1, wherein the data dependency determining unit is configured to determine whether there is a dependency relationship between data of a control signal that has not been executed and data of a control signal that are executed, if not, the group of control signals is allowed to be transmitted immediately, otherwise, the group of control signals waits and are allowed to be transmitted after all the control signals on which this control signal depends are fully executed.

9. A method for performing a pooling operation of a single layer artificial neural network, comprising:

reading in instructions and caching the read instruction;
decoding the instructions into control signals, and then distributing the control signals to an operation module performing the pooling operation; and
performing maximization operations of a max-pooling operation, or accumulation and multiplication operations of an avgpooling operation.

10. The method according to claim 9, wherein in a forward operation of the max-pooling operation, the operation module compares each input vector in turn and take the maximum value as an output vector.

11. The method according to claim 10, wherein in the forward operation of the max-pooling operation, the operation module cyclically reads input vectors of a polling kernel, compares each input vector to obtain an output vector of a new kernel, and stores an index vector corresponding to each output vector until the pooling operation in the current layer is completed.

12. The method according to claim 10, wherein in a reverse training of the max-pooling operation, the operation module outputs an input gradient vector to a corresponding storage location through a data access unit according to the index vector stored in the forward operation, to obtain an output gradient vector.

13. The method according to claim 9, wherein in a forward operation of the avgpooling operation, the operation module accumulates each input vector in turn and performs a multiplication operation by 1/kernel_size therein to obtain an output vector; the kernel_size represents a size of the kernel; cyclically reads an input vector of a new kernel and performs accumulation and multiplication operations to obtain a new output vector of the kernel until the pooling operation of the current layer is completed.

14. The method according to claim 9, wherein in a reverse training of the avgpooling operation, the operation module multiplies an input gradient vector by 1/kernel_size, and outputs the input gradient vector to a corresponding storage location through the data access unit to obtain an output gradient vector..

15. A method for performing a pooling operation of a multi-layer artificial neural network, comprising when operations of a last layer of the multi-layer artificial neural network is completed, an output neuron vector or an output gradient vector obtained by the operation module on the last layer are as an input neuron vector or an input gradient vector of a next layer, the next layer is performed by the method according to any one of claims 9 to 14.

FIG. 1

Controller
unit

2

41 ~ operation unit

Data dependency
determining unit

42 ~

4

neuron storage
unit

43 ~

Data
access
unit

3

FIG. 2

out0           out1           out2           out3

*1/kernel_size
(avgpooling
operation)

*1/kernel_size
(avgpooling
operation)

*1/kernel_size
(avgpooling
operation)

*1/kernel_size
(avgpooling
operation)

+(avgpooling);
max(maxpooling)

+(avgpooling);
max(maxpooling)

+(avgpooling);
max(maxpooling)

+(avgpooling);
max(maxpooling)

in0           in1           in2           in3

FIG. 3

h00    h01    h02    h03

*1/kernel_size (in avgpooling operation)

*index(in max pooling operation)

in0    in1    in2    in3

FIG. 4

An IO instruction is pre-stored in a first address of the instruction storage unit. — S1

At the beginning of the operation, a controller unit reads the IO instruction from the first address, according to decoded microinstructions, a data access unit reads all the instructions of the pooling operation from an external address space. — S2

The controller unit then reads a next IO instruction, according to decoded microinstructions, the data access unit reads all the data required by the operation module from the external address space to the neuron storage unit. — S3

The controller unit then reads a next CONFIG instruction, according to decoded microinstructions, and the apparatus configures various constants required for the calculation of the pooling operation of the current layer. — S4

According to decoded microinstructions, the operation unit of the operation module then reads input neuron vectors and an intermediate result vector from the neuron storage unit to complete the accumulation and multiplication operations or the maximum value operation of the input neuron vectors and write back the final output neuron vectors to the neuron storage unit. — S5

The controller unit then reads a next IO instruction, according to decoded microinstructions, the data access unit stores the output vector in the neuron storage unit to a specified address of the external address space, and the operation is completed. — S6

FIG. 5

| T1 | An IO instruction is pre-stored in a first address of the instruction storage unit. |
|---|---|

| T2 | At the beginning of the operation, a controller unit reads the IO instruction from the front address, according to decoded microinstructions, a data access unit reads all the instructions of the calculation of the artificial neural network. |
|---|---|

| T3 | The controller unit then reads a next IO instruction, according to decoded microinstructions, the data access unit reads all the data required by the main operation module from the external address space, including input gradient vectors and index vectors in the max pooling operation. |
|---|---|

| T4 | The controller unit then reads a next CONFIG instruction, according to decoded microinstructions, the apparatus configures various constants, including the reciprocal 1/kernel_size of the size of the pooling kernel in the avgpooling operation, the accuracy setting of the calculation of the current layer, and the learning rate when updating the weight. |
|---|---|

| T5 | According to the microinstruction decoded by the COMPUTE instruction, the operation unit of the operation module reads the input gradient vector and the index vector required in the max pooling operation to complete multiplication operations (multiplied by 1/kernel_size in the avgpooling operation; multiplied by the index vector in the max-pooling operation), transfers the output gradient vector, to obtain an input gradient vector of the reverse training on a next layer, writes back the input gradient vector to the neuron storage unit 43. |
|---|---|

| T6 | The controller unit then reads a next IO instruction, according to the decoded microinstruction, the data access unit stores the output vector of the neuron storage unit to a specified address of the external address spacem, and the operation is completed. |
|---|---|

FIG. 6

| INTERNATIONAL SEARCH REPORT | International application No. |
|---|---|
| | **PCT/CN2016/080696** |

**A. CLASSIFICATION OF SUBJECT MATTER**

G06N 3/063 (2006.01) i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI: convolutional neural network, pooling, compute, max, average

**C. DOCUMENTS CONSIDERED TO BE RELEVANT**

| Category* | Citation of document, with indication, where appropriate, of the relevant passages | Relevant to claim No. |
|---|---|---|
| A | FANG, Rui et al., "FPGA-based Design for Convolution Neural Network", COMPUTER ENGINEERING AND APPLICATIONS, number 8, 31 December 2015 (31.12.2015), page 33, left column, paragraph 4 to page 34, right column, paragraph 5, and figures 1-3 | 1-15 |
| A | CN 105488565 A (INSTITUTE OF COMPUTING TECHNOLOGY, CHINESE ACADEMY OF SCIENCES), 13 April 2016 (13.04.2016), the whole document | 1-15 |
| A | CN 104035751 A (TENCENT INC.), 10 September 2014 (10.09.2014), the whole document | 1-15 |
| A | CN 105095902 A (HUAWEI TECHNOLOGIES CO., LTD.), 25 November 2015 (25.11.2015), the whole document | 1-15 |
| A | US 2010223219 A1 (CANON KABUSHIKI KAISHA), 02 September 2010 (02.09.2010), the whole document | 1-15 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 January 2017 (13.01.2017) | **06 February 2017 (06.02.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Linlin** Telephone No.: (86-10) **62414069** |

Form PCT/ISA/210 (second sheet) (July 2009)

## INTERNATIONAL SEARCH REPORT
Information on patent family members

International application No.

**PCT/CN2016/080696**

| Patent Documents referred in the Report | Publication Date | Patent Family | Publication Date |
|---|---|---|---|
| CN 105488565 A | 13 April 2016 | None | |
| CN 104035751 A | 10 September 2014 | CN 104035751 B | 12 October 2016 |
| | | WO 2015192812 A1 | 23 December 2015 |
| | | US 2016321777 A1 | 03 November 2016 |
| CN 105095902 A | 25 November 2015 | None | |
| US 2010223219 A1 | 02 September 2010 | JP 5184824 B2 | 17 April 2013 |
| | | WO 2008153194 A1 | 18 December 2008 |
| | | US 7937346 B2 | 03 May 2011 |
| | | JP 2008310700 A | 25 December 2008 |
| | | CN 101681449 A | 24 March 2010 |
| | | CN 101681449 B | 06 March 2013 |

Form PCT/ISA/210 (patent family annex) (July 2009)